# EUROPEAN PATENT SPECIFICATION

(11) **EP 2 504 730 B1**
(45) Date of publication and mention of the grant of the patent: **11.09.2019**
(21) Application number: 09805688.0
(22) Date of filing: 24.11.2009
(51) Int. Cl.: G02B 6/44, H02G 3/04

(54) **BEND MANAGER FOR ON-WALL INSTALLATION OF OPTICAL FIBER UNITS**
KNICKSCHUTZVORRICHTUNG FÜR LICHTWELLENLEITERSAUFPUTZMONTAGE
DISPOSITIF DE CONTROLE DE LA COURBURE DE CABLE A FIBRE OPTIQUE POUR INSTALLATION MURALE EN SAILLIE

(43) Date of publication of application: 03.10.2012
(73) Proprietor: Prysmian S.p.A., 20126 Milano (IT)
(72) Inventor: ABBIATI, Fabio, 20126 Milano (IT); GRIFFITHS, Ian James, 20126 Milano (IT); LE DISSEZ, Arnaud, 20126 Milano (IT)
(74) Representative: Maccalli, Marco
(86) International application number: PCT/EP2009/065727
(87) International publication number: WO 2011/063828

(56) References cited:
- EP-A1- 0 789 167
- EP-A1- 1 186 925
- EP-A2- 0 893 865
- EP-A2- 1 684 104
- WO-A1-00/67052
- WO-A1-98/47211
- US-A1- 2009 190 894

## Description

### Background of the invention

### Field of the invention

The present invention generally relates to the field of telecommunications. More specifically, the present invention relates to the field of telecommunications through optical fibers. Even more specifically, the present invention relates to a bend manager device for on-wall installation of telecommunication cables housing optical fibers and/or tubes through which optical fibers are made to pass.

### Overview of the related art

In order to provide a telecommunication network connection to an end user, a cabling procedure has to be performed, that includes, *inter alia*, deploying optical fiber units along a "last-mile" path, *i.e.* the final leg of delivering connectivity from a communications provider to the end user's premises, for example, the end user's home.

For the purposes of the present description, by "optical fiber unit" there is meant a single optical fiber or a plurality of optical fibers assembled to form a multifiber unit, optionally contained in a retaining element also known as "module", the optical fibers in the unit being advantageously buffered.

The deployment of optical fiber units may be performed substantially in two different ways.

A first way comprises positioning a telecommunication cable housing optical fiber units along a path. A second way consists of pulling (typically by means of a pulling rope) optical fiber units through an already positioned tube.

In both cases, the path of the cable and the position of the tube can be at least partly "on-wall", *.e.g.* in the end-user's room.

The optical fiber unit deployment exhibits critical aspects that may impair the optical transmission characteristics of the optical fibers. In general, excessive bending of the optical fibers, both during and after the deployment, should be avoided being possible source of attenuation of the optical signal worsening the quality of the telecommunication service. Additional criticalities are faced when, during the deployment, the optical fiber units are to be dragged through a tube already positioned along a path including corners: the pulling resistance experienced in correspondence of the tube bend may render difficult the deployment and cause friction harmful to the optical fibers.

US 6,049,040 discloses a universal cable guide apparatus for a precise placement and protection of a communication cable in an outside plant installation. The universal cable guide comprises a body of predetermined multi-dimensional shape, having at least one cable receiving channel formed in a major surface of and along the length of the body. A primary cable guide fastening element is integrally formed as part of the body and along an outer edge of the body to receive fasteners to secure the universal cable guide to a surface. A plurality of apertures or clam features are formed along the length of the body in a predetermined pattern to receive either fasteners to secure the universal cable guide to a surface and/or to receive fasteners to secure a mating cable protection element which can be placed on the top of the body. The mating cable protection element can be formed to cover the top surface of the body to enclose the communication cable. This cable protection element can include apertures formed therein that match the plurality of apertures formed in the body to enable fasteners to be used to secure the two elements together and to a surface, or can be formed with integral fasteners which mate with the corresponding plurality of apertures formed in the body. The interconnection of the body and cable protection element forms the resultant channel in which the communication cable is secured and protected.

Such proposed guide apparatus is rigid, cannot be adapted *in situ* to different kind and degree of bending. Therefore, a cabling procedure performed through such cable guide needs a previous analysis of bending parameters (such as the size of the corner and the angle thereof) along the path and a set of cable guides diverse in size. Also, the mating of the cable to the guide apparatus is provided by fasteners, thus making it relatively difficult and time-consuming, also in case, after the cabling, the cable inside the cable guide needs to be accessed for checking or replacing it.

US 7,049,521 relates to a flexible wiring duct for use in a cable management system, the duct having a series of saw cuts made on a repeating pattern that allow the wiring duct to flex in any direction. The wiring duct includes a base, a first side wall connected to the base, and a second side wall connected to the base. The wiring duct also includes a first aperture formed in the first side wall and extending into the base, and a second aperture formed in the second side wall and extending into the base.

The side walls of the proposed duct are not tapered thus unable to retain the cable housed. As a consequence said duct cannot be used for on-wall installation applications. Also, the multidirectional flexibility of said wiring duct does provide to the cable housed therein neither protection against possible longitudinal sliding during the pulling operation of the optical fibers, nor protection against excessive bending radius.

US 2009/190894 A1 discloses an edge protector for use with fiber optic cables includes a body having a first portion and a second portion. The first portion includes a first surface and an oppositely disposed second surface. The second portion includes a tang and a radius protrusion having a radius. The tang extends outwardly from the radius protrusion such that the tang extends beyond the second surface.

WO 98/47211 A1 discloses an outside corner fitting including an arcuate channel having a radius of curvature greater than a predetermined minimum bend radius for the cable to be installed in the duct system. A first embodiment of the invention fits within straight ducts and allows the straight ducts to be placed flush with the outside corner of the wall. A second embodiment features an outside corner fitting that abuts against the straight ducts and is mounted directly to the wall. Both embodiments include a cover having a first edge and a second edge, the first edge being shorter than the second edge. The shorter first edge minimizes the gap between the cover and the wall if the wall is not exactly 90 degrees.

WO 0067052 A1 discloses a two piece metal raceway (base and cover sections) that accommodates not only fiber optic cable at 90 degree assemblies, that includes divider means defining a second wireway channel along side a first wireway channel accommodating the fiber optic cable. Curved walls of the corner assembly base section have a radius of two inches or more. The back wall includes slots which receive tabs that may be spot welded and/or riveted to provide a permanent connection between the divider element and the corner assembly base section.

### Summary of the invention

The Applicant felt the need of a device for managing bends in on-wall deploying and maintenance of optical fiber units. Said device should have the following features:
- easy to be used by an operator;
- adapted to fit different size of bending;
- capable of keeping the telecommunication cable/tube for optical fiber unit firm against possible longitudinal sliding while a fiber unit is pulled through;
- capable of protecting the telecommunication cable/tube firm against possible longitudinal sliding and transversal stress during the lifetime thereof.

Hereinafter, unless otherwise indicated, the term "telecommunication cable" and "tube for optical fiber unit" shall be collectively referred to as "optical conduit".

The present invention relates to a bend manager according to claim 1, in particular for the on-wall deployment and maintenance thereof. The bend manager device comprises a base having an upper surface and a lower surface, and at least one retaining element protruding from the upper surface, said at least one retaining element defining a channel for accommodating an optical conduit. The bend manager device has at least one arc-shaped portion having a radius not lower than the optical fiber minimum bend radius, and substantially rectilinear portions, each one extending from a corresponding end of the at least one arc-shaped portion.

In the present description and claims, as "retaining element" it is meant an element capable of keeping the optical conduit in operative association with the upper surface of the bend manager.

As "minimum bend radius" it is intended the radius value under which an optical fiber can start showing macrobending losses, *i.e.* attenuation of the signal transmission caused by such bending. Such value depends on the kind of optical fiber used in the connection - limits are generally specified by the fiber manufacturer - and can be of 10-20 mm, though in special cases the minimum bend radius can be as low as 3-4 mm.

The bend manager of the invention has a plurality of retaining elements, advantageously at least three. The retaining elements are provided in sequence on a first longitudinal side and on a second longitudinal side of the upper surface, said first and second longitudinal sides being opposite one another.

The retaining elements of the first side sequence are staggered with respect to the retaining elements of the second side sequence. Such a configuration facilitates the accommodation of the optical conduit in the channel of the bend manager device,

Advantageously, a retaining element has a distal portion leaning toward the longitudinal axis of the base.

The bend manager of the invention has at least one indentation formed in the lower surface of the base at a substantially central point of the arc-shaped portion. The indentation is useful to match a wall corner having a convex angle and helps in keeping the bend manager in place, especially when optical fiber units are pulled through a tube accommodated in the bend manager. The indentation can enhance the flexibility of the bend manager but, at the same time, can allow the bend manager to bow to an extent never lower than the minimum bend radius. The presence of the indentation allows the bend manager to be readily used both at convex and at concave corners.

The base may be, from the side of the lower surface, chamfered in correspondence of at least one of the end portions.

Optionally, the bend manager of the invention comprises at least one notch, preferably two notches, in the lower surface of the base, at an intermediate position between the end and the center of the bend manager extent. Said notches enhance the flexibility of the bend manager.

Optionally, the bend manager of the invention can be provided with a cap associable thereto for at least partly covering the channel. The presence of a cap is particularly useful in the case the optical conduit is provided partially in-wall. The cap is positioned to cover the hole made in the wall for the conduit passage thus protecting the room from possible debris coming from wall and restoring the aesthetics.

The bend manager, the cap or both may be provided with cooperating elements for mounting the cap onto the bend manager. Said cooperating elements may include at least one protrusion formed in either the base of the bend manager or in the cap, adapted to engage a corresponding opening formed in either the cap or in the base of the bend manager.

The cap may have a generically cylindrical end portion. Such an end portion provides an improved lateral covering of the channel. From said cylindrical end portion a circular or semi-circular lip can project opposite to an upper surface of the cap. The lip allows a safe engagement of the cap to a hole in the wall.

In order to allow the bend manager to be flexible so as to be adapted to wall corners of different kind, the bend manager may advantageously be made of flexible plastic material, for example a thermoplastic material.

The bend manager of the present invention allows an operator having to perform a cabling procedure to easily accommodate an optical conduit into the bend manager channel. In the case of a tube for housing optical fiber units, once the tube provided with the present bend manager in correspondence with path bending is put in position, the pulling of optical fiber units through said the tube can be performed without substantial resistance against traction in correspondence of bending of the path.

It has to be noted that when an elongated element, such as an optical fiber unit, is pulled along a path including a curve, the resistance force at the exit of a curve is that at the entrance multiplied by an exponential factor (depending on the radius of the curve). If the resistance caused by a single curve can be negligible, the sum of the resistance of a plurality of curves can become a problem. It is important to limit the bending radius of the conduit through which an optical fiber unit has to be pulled.

The bend manager allows maintaining the optical conduit firm against possible longitudinal sliding during the pulling operation. The optical conduit remains firm inside the bend manager - while the optical fiber unit is pulled through the conduit - also in the absence of fixing tools, such as clip nails, connecting the optical conduit to the wall.

The retaining elements ensure the optical conduit with additional protection against longitudinal sliding and transversal stresses during the lifetime thereof. The main advantage of having staggered retaining elements is that of easing the feeding of the optical conduit in the bend manager, such feeding entailing substantially no deformation to the optical conduit and to the optical fibers unit contained therein.

When the bend manager is provided with indentations and/or at least one notch, it is more readily adapted to fit different size of bending. In particular, when the rectilinear portions of the bend manager can be deformed without substantially bending the arc-shaped portion, the optical fiber units within the optical conduit are substantially not bended beyond a critical radius of curvature.

### Brief description of the annexed drawings

Further details are provided in the following description of some exemplary embodiments of the invention, with reference to the attached figures, wherein:
**Figure 1** is a perspective view of a bend manager according to an embodiment of the present invention;
**Figure 2** is a perspective view of the bend manager of **Figure 1**, with an associated cap, according to an embodiment of the present invention;
**Figure 3A** is a schematic projection view of on-wall positioning of the bend manager and associated cap;
**Figure 3B** is a schematic view of the bend manager of **Figure 1** from the point of view **A**;
**Figure 4A** is a schematic top view of the bend manager of **Figure 1** placed around a corner of a wall having a convex angle, and
**Figure 4B** is a schematic top view of the bend manager of **Figure 1** placed around a corner of a wall having a concave angle.

### Detailed description of preferred embodiments of the invention

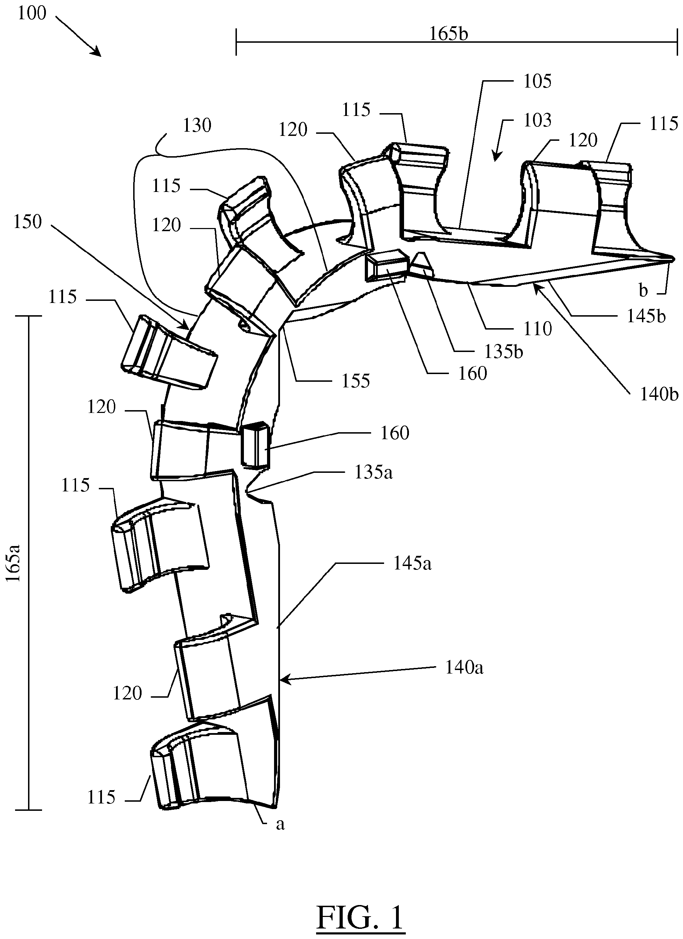

In **Figure 1** there is shown in perspective view a bend manager **100** according to an embodiment of the present invention. The bend manager **100** includes a base **103** having an upper surface **105** and a lower surface **110**. The bend manager includes a first sequence of retaining elements **115** protruding form the upper surface **105** along a first longitudinal side thereof and a second sequence of retaining elements **120** protruding from the upper surface **105** along a second longitudinal side thereof opposite to the first longitudinal side. Each retaining element **115** has a slightly curved cross-section extending from the first longitudinal side and leaning towards the second longitudinal side; analogously, each retaining element **120** has a slightly curved cross-section extending from the second longitudinal side and leaning towards the first longitudinal side. The first and second sequences of retaining elements **115**, **120** define therebetween a channel **130** of the bend manager **100** being apt to accommodate therein an optical conduit.

Preferably, the first sequence of retaining elements **115** is at least partly staggered with respect to the second sequence of retaining elements **120**, in such a way that the retaining elements **115** of the first longitudinal sequence do not entirely face the retaining elements **120** of the second longitudinal sequence. Therefore, while the staggered pattern of the first and second sequences of retaining elements **115**, **120** makes easy for an operator to insert the optical conduit into the channel **130** of the bend manager **100**, the curved cross-section of the retaining elements allows holding the optical conduit firmly once housed.

The lower surface **110** of the bend manager **100** includes at least one notch, for example two notches **135a**, **135b** as in the shown example; the portions of the bend manager **100** extending substantially from each notch **135a**, **135b** to corresponding ends **a**, **b** define respective substantially rectilinear portions **140a**, **140b** of the bend manager **100**. The base **103** of the bend manager **100**, in correspondence of the rectilinear portions **140a**, **140b**, has a longitudinal chamfer **145a**, **145b** thereby the thickness of the base **103** progressively reduces moving along the rectilinear portions **145a**, **145b** towards the ends **a**, **b**; this chamfer **145a**, **145b** allows the bend manager **100** better adapting to the walls that define a convex corner, as will be shown in detail in the following.

The base of the bend manager **100** is transversally rounded in correspondence of each side of the rectilinear portions **140a, 140b,** as indicated with **170** in the figure. An arc-shaped central portion **150** (intermediate to the rectilinear portions **140a, 140b)** of the bend manager **100** is produced with a predetermined radius of curvature, whose value is not lower than a minimum radius of curvature defining a maximum bend threshold for the optical fibers included in the optical conduit accommodated in the channel **130**. In correspondence of the arc-shaped central portion **150**, the base **103** includes, on the lower surface **110**, an indentation **155**, preferably right-angled, adapted to match a convex, often right, angle corner of a wall (not shown in the figure), as it will be described in detail in the following.

The bend manager **100** thus essentially includes a first leg **165a** and a second leg **165b**, each one of the two legs **165a**, **165b** comprising a respective one of the two rectilinear portions **140a**, **140b**, and one half of the arc-shaped central portion **150**.

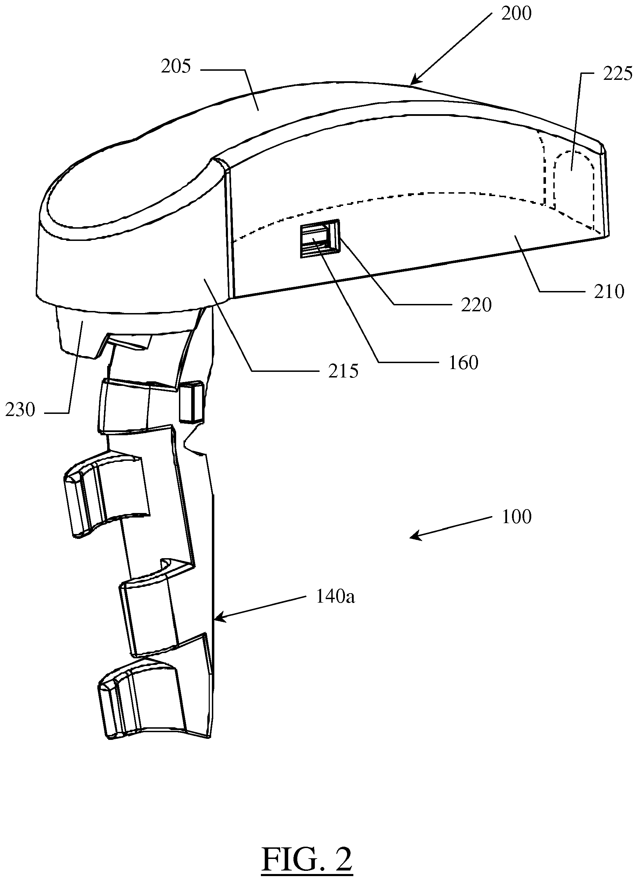

In an embodiment of the present invention, protrusions **160** projecting laterally from each longitudinal side of the base **103** are provided. In the exemplary embodiment of **Figure 1**, two pairs of protrusions **160** are provided (due to the perspective, only protrusions **160** projecting from one longitudinal side of the base **103** are visible). Reference is made also to **Figure 2**, which is a perspective view of the bend manager **100** with a cap **200** mounted thereon. The cap **200** includes an upper wall **205** and two side walls **210** (only one visible in the figure). The two side walls **210** are, at one end thereof, joined by a cylindrical end portion **215**; the width of the cap **200** in correspondence of the end portion **215** is higher compared to the remaining of the cap **200**. Each of the side walls **210** of the cap **200** has an opening **220** formed therein, said opening being adapted to be engaged by a respective protrusion **160** projecting from the base **103** of the bend manager **100**. Opposite to the end portion **215**, the cap **200** has an opening **225** for allowing the passage of an optical conduit. A semi-circular lip **230** projects from the end portion **215** opposite to the upper wall **205**.

The cap **200** can be mounted by snap-fit onto the bend manager **100**, so as to cover either one or the other of the first and second legs **165a**, **165b** thereof.

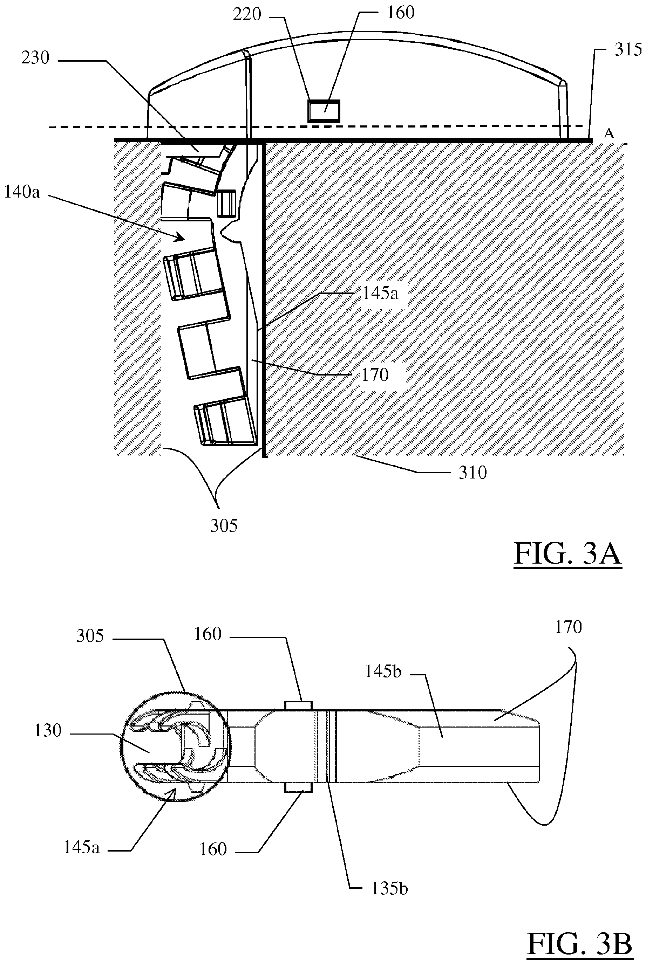

The use of the cap **200** is particularly suitable in situations wherein an optical conduit is passed through a hole in a wall. Such a scenario is depicted schematically in **Figure 3A**. The bend manager **100** is used for guiding the optical conduit around the edge of the hole in the wall. One of the two legs **165a**, **165b** of the bend manager **100** is inserted into the wall through the hole, while the other leg **165b**, **165a** rests against the external wall surface. The cap **200** is mounted onto the leg **165a** or **165b** that lies onto the external wall surface. The upper wall **205** and the side walls **210** of the cap **200** cover the leg **165a**, **165b** of the bend manager **100** which is not inserted in the hole; the cylindrical end portion **215** is suitable for completely covering the hole so that it is not visible by the end user.

In particular, referring to **Figure 3A**, the leg **165a** of the bend manager **100** is inserted in a hole **305** of the wall **310**. The other leg **165b** of the bend manager **100** resting against the external surface **315** of the wall **310** is covered by the cap **200**, which is mounted by snap-fit as described above. The cylindrical end portion **215** of the cap **200** covers the hole **305**. The projecting lip **230** engages the hole **305** to ensure a sealing thereof.

Referring to **Figure 3B**, the circle-line represents the hole **305** where the leg **165a** of the bend manager **100** is inserted. In the figure the protrusions **160** are also visible. The openings **220** of the cap **200** engaging the protrusions **160** allow the cap **200** to completely cover the portion of the bend manager **100** not inserted into the hole **305**.

The transversally rounded profile **170** of the base **103** in correspondence of each side of the rectilinear portions **140a, 140b** thereof follows the profile of the hole in the wall, in such a way that a leg **165a, 165b** can be easily inserted in the hole.

Advantageously, the protrusions **160** of the bend manager **100** are both in the rectilinear portion **140a** and in the rectilinear portion **140b** of the bend manager **100**; in this way, either the first leg **165a** (as depicted in the figure) or the second leg **165b** may be inserted into the hole **305** without distinction, thus rendering the bend manager easy to use.

The bend manager of the invention is preferably made of thermoplastic material having flexibility properties, for example acrylonitrile butadiene styrene, polyvinyl chloride or polycarbonate. For example, the bend manager is manufactured by injection moulding.

Thanks to the notches **135a, 135b** and to the flexibility of the material used for manufacturing the bend manager **100**, each rectilinear portion **140a**, **140b** can flex along the longitudinal direction substantially leaving unaffected the arc-shaped central portion **150**, which substantially maintains its predefined radius of curvature; this ensures that the optical fibers, even in correspondence of a corner, are not bent beyond the minimum bending radius. Thanks to this, as will be better shown in the following, the particular structure described allows adapting the bend manager **100** to different wall corners, both convex and concave.

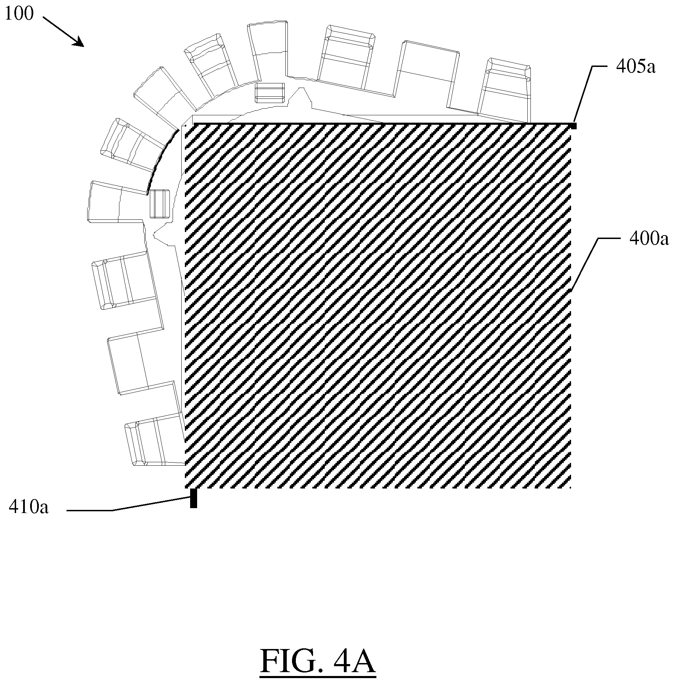

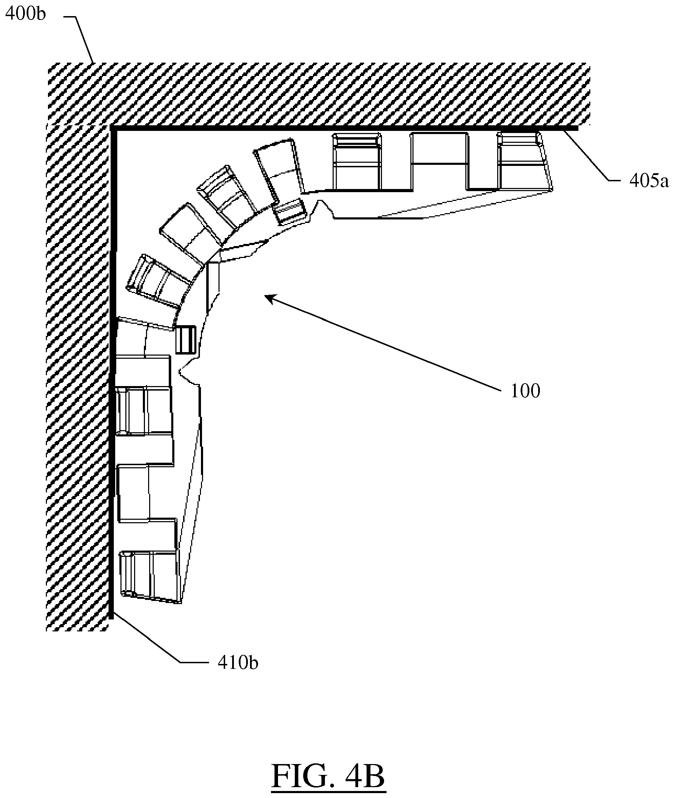

In **Figures 4A****,** **4B** two possible placements of the bend manager **100** are shown.

In particular, **Figure 4A** shows a schematic top view of an arrangement of the bend manager **100** in a corner of a wall **400a** having a convex angle. The concave right angle indentation **155** of the bend manager **100** adapts to the edge of the convex right angle of the corner **400a** of the wall, while the longitudinal chamfers **145a, 145b** of the lower surface **110** of the rectilinear portion **140a, 140b** allow a good adherence of the bend manager **100** to the plane surfaces **305a, 310a** of the corner **400a** of the wall.

The bend manager can adapt to corners having angles different from the right angle (in the practice, it may occur that the corners of the wall do not form a precise right angle). Thanks to the flexibility of the bend manager and to the presence of the notches **135a, 135b,** which enhance the intrinsic flexibility of the bend manager material, the bend manager **100** can adapt to different kind of wall corners.

Turning now to **Figure 4B****,** there is shown a schematic top view of an arrangement of the bend manager **100** and a corner **400b** of a wall having a concave angle. For the positioning in the corner **400b** of the wall, the bend manager **100** is rotated with respect to the arrangement shown in **Figure 4A****,** so that the first and second sequences of retaining elements **115, 120** defining the channel **130** abuts the plane surfaces **405b, 410b** of the walls that forms the corner **400b.**

Similarly to the convex angle case, the bend manager can adapt to concave wall corners not necessarily of 90° thanks to the flexibility of the bend manager and in particular of the rectilinear portions **140a, 140b,** without substantially modifying the radius of curvature of the arc-shaped central portion **150.**

In order to satisfy local and specific requirements, a person skilled in the art may apply to the solution described above many commonsensical and/or physical modifications and alterations. More specifically, although the present invention has been described with a certain degree of particularity with reference to a preferred embodiment thereof, it should be understood that various omissions, substitutions and changes in the form and details as well as other embodiments are possible; moreover, it is expressly intended that specific elements and/or method steps described in connection with any disclosed embodiment of the invention may be incorporated in any other embodiment as a matter of general design choice.

For example, the pattern of the first and second sequences of retaining elements **115**, **120** may be conveniently different, for facilitating the insertion of optical conduit. For example, pairs of retaining elements of the first side sequence may be staggered with respect to corresponding pairs of retaining elements of the second side sequence, so as not to compromise the cabling procedure in case of breaking of a retaining element. The cross-section and shape of the retaining elements **115**, **120** may be different, for example they can have a hook shape or a half-T shape.

The longitudinal chamfers **145a**, **145b** and/or the rounding **170** of the base of the bend manager **100**, may be absent, especially when the intrinsic flexibility of the material bend manager is sufficient for allowing the bend manager to adapt to wall corners of different angle values without the risk of displacement of the bend manager with respect to the corner.

The cap **200** may be secured to the bend manager device in a different way, for example through screws or glue, or the cap **200** may be integral, in one piece with the bend manager. The cap may have any commonsensical size and shape.

## Claims

1. A bend manager (**100**) for optical fiber units, comprising:
- a base (**103**) having an upper surface (**105**) and a lower surface (**110**),
- at least one arc-shaped portion (**150**) having a radius not lower than an optical fiber minimum bend radius,
- substantially rectilinear portions (**140a**, **140b**) each one extending from a corresponding end of the at least one arc-shaped portion,
- at least one indentation (**155**) being formed in the lower surface of the base at a substantially central point of the arc-shaped portion, said indentation (**155**) being adapted to match a convex angle corner of a wall,
**characterized by** comprising:
- a plurality of retaining elements (**115**, **120**) protruding from the upper surface, said plurality of retaining elements (**115**, **120**) defining a channel (**130**) for accommodating an optical conduit, wherein the retaining elements (**115**, **120**) of said plurality are provided in sequence on a first longitudinal side and on a second longitudinal side of the upper surface (**105**), said first and second longitudinal sides being opposite to each other, wherein the retaining elements (**115**) on the first longitudinal side are staggered with respect to the retaining elements (**120**) on the second longitudinal side.

2. The bend manager of claim 1, wherein the retaining elements (**115**, **120**) have a distal portion leaning toward a longitudinal axis of the base (**103**).

3. The bend manager according to any of the preceding claims, wherein the base is, from the side of the lower surface (**110**), chamfered in correspondence of at least one of said rectilinear portions (**140a**, **140b**).

4. The bend manager of any one of the preceding claims, comprising at least one notch (**135a, 135b**) formed in the lower surface (**110**) of the base (**103**) at an intermediate position between an end (**a, b**) and a center of the bend manager extent.

5. A bend manager assembly comprising:
- a bend manager (**100**) according to any one of the preceding claims; and
- a cap (**200**) associatable to the bend manager (**100**) for at least partly covering the channel (**130**) for accommodating an optical conduit.

6. The bend manager assembly of claim 5, wherein the bend manager (**100**) and the cap (**200**) are provided with cooperating elements (**160, 220**) for mounting the cap (**200**) onto the bend manager (**100**).

7. The bend manager assembly of claim 6, wherein said cooperating elements (**160, 220**) include at least one protrusion (**160**) formed in either the base of the bend manager (**100**) or in the cap (**200**), adapted to engage a corresponding opening (**220**) formed in either the cap (**200**) or in the base of the bend manager (**100**).

8. The bend manager assembly of claim 5, 6, or 7, wherein the cap (**200**) has a generically cylindrical end portion (**215**), from which a semi-circular lip (**230**) projects opposite to an upper surface (**205**) of the cap (**200**).

9. The bend manager of any of claims 1 to 4 or the bend manager assembly of any of claims 5 to 8, wherein the bend manager (**100**) and/or the cap (**200**) is made of flexible plastic material.

## Patentansprüche

1. Knickschutzvorrichtung (100) für Lichtwellenleiter, umfassend:
- eine Basis (103) mit einer Oberseite (105) und einer Unterseite (110),
- mindestens einem bogenförmigen Abschnitt (150) mit einem Radius, der nicht kleiner als ein Mindestknickradius des Lichtwellenleiters ist,
- im Wesentlichen geradlinige Abschnitte (140a, 140b), die sich jeweils von einem entsprechenden Ende des mindestens einen bogenförmigen Abschnitts erstrecken,
- mindestens eine Einkerbung (155), die in der Unterseite der Basis an einem im Wesentlichen zentralen Punkt des bogenförmigen Abschnitts ausgebildet ist, wobei die Einkerbung (155) dazu ausgebildet ist, mit einer konvexen Winkelecke einer Wand zu korrespondieren, **gekennzeichnet durch:**
- eine Vielzahl von Halteelementen (115, 120), die von der Oberseite vorstehen, wobei die Vielzahl von Halteelementen (115, 120) einen Kanal (130) zur Aufnahme eines Lichtwellenleiters bilden, wobei die Vielzahl von Halteelemente (115, 120) nacheinander auf einer ersten Längsseite und auf einer zweiten Längsseite der Oberseite (105) angeordnet sind, wobei die erste und die zweite Längsseite einander gegenüberliegen, wobei die Halteelemente (115) auf der ersten Längsseite versetzt sind in Bezug auf die Halteelemente (120) auf der zweiten Längsseite.

2. Knickschutzvorrichtung nach Anspruch 1, wobei die Halteelemente (115, 120) einen distalen Abschnitt aufweisen, der zu einer Längsachse der Basis (103) geneigt ist.

3. Knickschutzvorrichtung nach einem der vorhergehenden Ansprüche, wobei die Basis von der Seite der Unterseite (110) mindestens einem der geradlinigen Abschnitte (140a, 140b) entsprechend abgeschrägt ist.

4. Knickschutzvorrichtung nach einem der vorhergehenden Ansprüche, umfassend mindestens eine Kerbe (135a, 135b), die in der Unterseite (110) der Basis (103) an einer Zwischenposition zwischen einem Ende (a, b) und einem Zentrum des Knickschutzvorrichtungumfangs ausgebildet ist.

5. Knickschutzvorrichtungsanordnung, umfassend:
- Knickschutzvorrichtung (100) nach einem der vorhergehenden Ansprüche; und
- eine Kappe (200), die mit der Knickschutzvorrichtung (100) verbunden werden kann, um den Kanal (130) zur Aufnahme eines Lichtwellenleiters zumindest teilweise abzudecken.

6. Knickschutzvorrichtungsanordnung nach Anspruch 5, wobei die Knickschutzvorrichtung (100) und die Kappe (200) mit zusammenwirkenden Elementen (160, 220) zum Befestigen der Kappe (200) auf der Knickschutzvorrichtung (100) angeordnet sind.

7. Knickschutzvorrichtungsanordnung nach Anspruch 6, wobei die zusammenwirkenden Elemente (160, 220) mindestens einen Vorsprung (160) aufweisen, der entweder in der Basis der Knickschutzvorrichtung (100) oder in der Kappe (200) angeordnet ist und angepasst ist zum Eingriff einer entsprechenden Öffnung (220), die entweder in der Kappe (200) oder in der Basis der Knickschutzvorrichtung (100) ausgebildet ist.

8. Knickschutzvorrichtungsanordnung nach Anspruch 5, 6 oder 7, wobei die Kappe (200) einen generischen zylindrischen Endabschnitt (215) aufweist, von dem eine halbkreisförmige Lippe (230) entgegengesetzt zu einer Oberseite (205) der Kappe (200) vorsteht.

9. Knickschutzvorrichtung nach einem der Ansprüche 1 bis 4 oder Knickschutzvorrichtungsanordnung nach einem der Ansprüche 5 bis 8, wobei die Knickschutzvorrichtung (100) und / oder die Kappe (200) aus flexiblem Kunststoffmaterial hergestellt sind.

## Revendications

1. Dispositif de gestion de courbure (100) d'unités à fibre optique, comprenant :
- une base (103) ayant une surface supérieure (105) et une surface inférieure (110),
- au moins une partie en forme d'arc (150) ayant un rayon qui n'est pas inférieur à un rayon de courbure minimal d'une fibre optique,
- des parties sensiblement rectilignes (140a, 140b) s'étendant chacune à partir d'une extrémité correspondante de l'au moins une partie en forme d'arc,
- au moins une indentation (155) formée dans la surface inférieure de la base au niveau d'un point sensiblement central de la partie en forme d'arc, ladite indentation (155) étant adaptée pour correspondre à un coin d'angle convexe d'un mur,
**caractérisé en ce qu'**il comprend :
- une pluralité d'éléments de maintien (115, 120) en saillie à partir de la surface supérieure, ladite pluralité d'éléments de maintien (115, 120) définissant un canal (130) pour recevoir un conduit optique, dans lequel les éléments de maintien (115, 120) de ladite pluralité sont fournis en séquence sur un premier côté longitudinal et sur un second côté longitudinal de la surface supérieure (105), lesdits premier et second côtés longitudinaux étant opposés l'un à l'autre, dans lequel les éléments de maintien (115) sur le premier côté longitudinal sont en quinconce par rapport aux éléments de maintien (120) sur le second côté longitudinal.

2. Dispositif de gestion de courbure selon la revendication 1, dans lequel les éléments de maintien (115, 120) ont une partie distale s'inclinant vers un axe longitudinal de la base (103).

3. Dispositif de gestion de courbure selon l'une quelconque des revendications précédentes, dans lequel la base est, à partir du côté de la surface inférieure (110), chanfreinée en correspondance avec au moins une desdites parties rectilignes (140a, 140b).

4. Dispositif de gestion de courbure selon l'une quelconque des revendications précédentes, comprenant au moins une encoche (135a, 135b) formée dans la surface inférieure (110) de la base (103) à une position intermédiaire entre une extrémité (a, b) et un centre de l'étendue du dispositif de gestion de courbure.

5. Ensemble de dispositif de gestion de courbure comprenant :
- un dispositif de gestion de courbure (100) selon l'une quelconque des revendications précédentes ; et
- un capot (200) pouvant être associé au dispositif de gestion de courbure (100) pour couvrir au moins partiellement le canal (130) pour recevoir un conduit optique.

6. Ensemble de dispositif de gestion de courbure selon la revendication 5, dans lequel le dispositif de gestion de courbure (100) et le capot (200) sont pourvus d'éléments coopérants (160, 220) pour monter le capot (200) sur le dispositif de gestion de courbure (100).

7. Ensemble de dispositif de gestion de courbure selon la revendication 6, dans lequel lesdits éléments coopérants (160, 220) incluent au moins une saillie (160) formée soit dans la base du dispositif de gestion de courbure (100), soit dans le capot (200), adaptée pour venir en prise avec une ouverture correspondante (220) formée soit dans le capot (200), soit dans la base du dispositif de gestion de courbure (100).

8. Ensemble de dispositif de gestion de courbure selon la revendication 5, 6, ou 7, dans lequel le capot (200) a une partie d'extrémité généralement cylindrique (215), à partir de laquelle une lèvre semi-circulaire (230) se projette à l'opposé d'une surface supérieure (205) du capot (200).

9. Dispositif de gestion de courbure selon l'une quelconque des revendications 1 à 4 ou ensemble de dispositif de gestion de courbure selon l'une quelconque des revendications 5 à 8, dans lequel le dispositif de gestion de courbure (100) et/ou le capot (200) est constitué de matière plastique souple.
